# EUROPEAN PATENT APPLICATION

(11) **EP 4 650 382 A1**
(43) Date of publication of application: **19.11.2025**
(21) Application number: 23916265.4
(22) Date of filing: 25.12.2023
(51) Int. Cl.: C08G 69/26, C08K 3/013, C08L 77/06

(54) **POLYAMIDE RESIN, RESIN COMPOSITION, AND MOLDED ARTICLE**

(30) Priority: 11.01.2023 JP 2023002119
(71) Applicant: MITSUBISHI GAS CHEMICAL COMPANY, INC., Chiyoda-ku Tokyo 100-8324 (JP)
(72) Inventor: SHIMOMURA, Yuki, Hiratsuka-shi, Kanagawa 254-0016 (JP); ODA, Takafumi, Hiratsuka-shi, Kanagawa 254-0016 (JP); OGURO, Hatsuki, Hiratsuka-shi, Kanagawa 254-0016 (JP); OTSUKA, Kosuke, Tokyo 100-8324 (JP)
(74) Representative: Vossius & Partner Patentanwälte Rechtsanwälte mbB
(86) International application number: PCT/JP2023/046334
(87) International publication number: WO 2024/150651

(57) **Abstract**

A polyamide resin contains a structural unit derived from a diamine and a structural unit derived from a dicarboxylic acid, 70 mol% or more of the structural unit derived from a diamine being derived from a bis(aminomethyl)cyclohexane, and of the structural unit derived from a dicarboxylic acid, from 99 to 60 mol% being derived from an α,ω-linear aliphatic dicarboxylic acid having from 4 to 20 carbons, and from 1 to 40 mol% being derived from a cyclohexanedicarboxylic acid, with the proviso that a total amount of the structural unit derived from a α,ω-linear aliphatic dicarboxylic acid having from 4 to 20 carbons and the structural unit derived from a cyclohexanedicarboxylic acid does not exceed 100 mol%. Provided is a molded article.

## Description

### Technical Field

The present invention relates to a polyamide resin, a resin composition, and a molded article.

### Background Art

Crystalline polyamide resins which are exemplified by nylon 6 and nylon 66 have been widely used in application for automobile components, machine components, electrical, electronic equipment components, and the like, as engineering plastics due to their excellent properties such as toughness, chemical resistance, and electrical properties, and ease in melt molding processing.

As demand for polyamide resins increases, there is a need for novel polyamide resins with new functions.

For example, Patent Document 1 describes a polyamide resin (A) containing: from 95 to 99.95 mass% of a polyamide (a-1) having a number average molecular weight of 2000 or more; and from 0.05 to 5 mass% of a polyamide oligomer (a-2) having a number average molecular weight of 500 or more and less than 2000, in which 25 mol% or more of all monomer units constituting the polyamide (a-1) and the polyamide oligomer (a-2) is a structural unit derived from an alicyclic monomer represented by General Formula (I) or General Formula (II) set forth below; and a content of a trans isomer structural unit derived from the alicyclic monomer is from 50 to 85 mol%.

**X - Z - X** **(I)**

In the formula, X represents a carboxyl group or an amino group, and Z represents an alicyclic structure having 3 or more carbons.

**X - R¹ - Z - R² - X** **(II)**

In the formula, X and Z are defined as described above, and R¹ and R² each independently represent an alkylene group having 1 or more carbons.

### Citation List

### Patent Document

Patent Document 1: WO 2014/042098

### Summary of Invention

### Technical Problem

In a case where molding is performed by injection molding or the like, a polyamide resin having a fast crystallization rate may be desired. To make the crystallization rate of the polyamide resin faster, replacement of a raw material monomer of the polyamide resin with another monomer was thought. However, when the crystallization rate is made faster, typically, a glass transition temperature (Tg) of the polyamide resin tends to drop.

The present invention aims to solve such issues, and thus an object of the present invention is to provide a polyamide resin having a fast crystallization rate and a high glass transition temperature, and to provide a resin composition and a molded article, in which the polyamide resin is used.

### Solution to Problem

Under such circumstances, as a result of study, the inventor of the present invention has found that the issues described above can be solved by replacing some of the dicarboxylic acids with cyclohexanedicarboxylic acids in a polyamide resin synthesized from a bis(aminomethyl)cyclohexane and an α,ω-linear aliphatic dicarboxylic acid having from 4 to 20 carbons.

Specifically, the aforementioned issues have been solved by the following means.
<1> A polyamide resin, containing: a structural unit derived from a diamine and a structural unit derived from a dicarboxylic acid,
   70 mol% or more of the structural unit derived from a diamine being derived from a bis(aminomethyl)cyclohexane, and
   of the structural unit derived from a dicarboxylic acid, from 99 to 60 mol% being derived from an α,ω-linear aliphatic dicarboxylic acid having from 4 to 20 carbons, and from 1 to 40 mol% being derived from a cyclohexanedicarboxylic acid, with the proviso that a total amount of the structural unit derived from an α,ω-linear aliphatic dicarboxylic acid having from 4 to 20 carbons and the structural unit derived from a cyclohexanedicarboxylic acid does not exceed 100 mol%.
<2> The polyamide resin according to <1>, wherein the bis(aminomethyl)cyclohexane includes 1,4-bis(aminomethyl)cyclohexane.
<3> The polyamide resin according to <2>, wherein a proportion of a trans isomer of the 1,4-bis(aminomethyl)cyclohexane is from 35 to 55 mol%.
<4> The polyamide resin according to <2> or <3>, wherein from 1 to 20 mol% of the structural unit derived from a dicarboxylic acid is derived from a cyclohexanedicarboxylic acid.
<5> The polyamide resin according to <1>, wherein the bis(aminomethyl)cyclohexane includes 1,3-bis(aminomethyl)cyclohexane.
<6> The polyamide resin according to <5>, wherein a proportion of a trans isomer of the 1,3-bis(aminomethyl)cyclohexane is from 0 to 40 mol%.
<7> The polyamide resin according to <5> or <6>, wherein from 1 to 40 mol% of the structural unit derived from a dicarboxylic acid is derived from a cyclohexanedicarboxylic acid.
<8> The polyamide resin according to any one of <1> to <7>, wherein the α,ω-linear aliphatic dicarboxylic acid having from 4 to 20 carbons includes adipic acid.
<9> The polyamide resin according to any one of <1> to <8>, wherein a glass transition temperature (Tg) of the polyamide resin according to differential scanning calorimetry (DSC) is from 113 to 200°C.
<10> A resin composition, including the polyamide resin according to any one of <1> to <9> and a reinforcing filler.
<11> A molded article, including the polyamide resin according to any one of <1> to <9>.
<12> A molded article, including the resin composition according to <10>.

### Advantageous Effects of Invention

According to the present invention, a polyamide resin having a fast crystallization rate and a high glass transition temperature, a resin composition and a molded article using the polyamide resin can be provided.

### Description of Embodiments

The following sections describe embodiments for implementing the present invention (hereinafter, may be simply referred to as "the present embodiment") in detail. It should be noted that the present embodiment described below are illustrative examples and do not limit the scope of the present invention.

A numerical range "from A to B" as used herein includes both endpoints, "A" and "B," as the lower and upper limits, respectively.

In the present description, various physical property values and characteristic values are those at 23°C unless otherwise stated.

In the present description, the number average molecular weight can be measured according to the description in paragraph 0047 of JP 2018-165298 A, the contents of which are incorporated herein, unless otherwise stated.

When measurement methods or the like described in standards mentioned in the present description differ depending on the year, the measurement methods or the like are based on the standards as of January 1, 2022, unless otherwise stated.

The polyamide resin of the present embodiment is characterized by containing a structural unit derived from a diamine and a structural unit derived from a dicarboxylic acid, 70 mol% or more of the structural unit derived from a diamine being derived from a bis(aminomethyl)cyclohexane, and of the structural unit derived from a dicarboxylic acid, from 99 to 60 mol% being derived from an α,ω-linear aliphatic dicarboxylic acid having from 4 to 20 carbons, and from 1 to 40 mol% being derived from a cyclohexanedicarboxylic acid, with the proviso that a total amount of the structural unit derived from an α,ω-linear aliphatic dicarboxylic acid having from 4 to 20 carbons and the structural unit derived from a cyclohexanedicarboxylic acid does not exceed 100 mol%.

Through such a constitution, a polyamide resin having a high crystallization rate and a high glass transition temperature can be obtained.

In the polyamide resin of the present embodiment, preferably 80 mol% or more of the structural unit derived from a diamine is derived from a bis(aminomethyl)cyclohexane, and depending on the use, more preferably 90 mol% or more, even more preferably 95 mol% or more, and yet even more preferably 99 mol% or more, of the structural unit derived from the diamine is derived from a bis(aminomethyl)cyclohexane.

The bis(aminomethyl)cyclohexane is preferably 1,3-bis(aminomethyl)cyclohexane and/or a 1,4-bis(aminomethyl)cyclohexane, and is more preferably 1,4-bis(aminomethyl)cyclohexane.

In the polyamide resin of the present embodiment, a proportion of a trans isomer of the bis(aminomethyl)cyclohexane (a proportion where a total amount of the trans isomer and the cis isomer is assumed to be 100 mol%) is preferably 5 mol% or more, and depending on the use or the like, may be 12 mol% or more, 15 mol% or more, 20 mol% or more, 25 mol%, 30 mol% or more, 35 mol% or more, 38 mol% or more, 42 mol%, and 48 mol% or more. Furthermore, the upper limit value of the proportion of the trans isomer of the bis(aminomethyl)cyclohexane (a proportion where a total amount of the trans isomer and the cis isomer is assumed to be 100 mol%) is preferably 55 mol% or less, and depending on the use or the like, may be 52 mol% or less, 48 mol% or less, 43 mol% or less, 38 mol% or less, 35 mol% or less, 30 mol% or less, 25 mol% or less, 20 mol% or less, and 15 mol% or less.

In the polyamide resin of the present embodiment, examples of the diamine other than the bis(aminomethyl)cyclohexane include aliphatic diamines, alicyclic diamines besides the bis(aminomethyl)cyclohexane, and aromatic diamines.

The aliphatic diamine is preferably an aliphatic diamine having from 6 to 12 carbons, and examples thereof include linear aliphatic diamines, such as 1,6-hexanediamine, 1,7-heptanediamine, 1,8-octanediamine, 1,9-nonanediamine, 1,10-decanediamine, 1,11-undecanediamine, and 1,12-dodecanediamine; and branched aliphatic diamines, such as 2-methyl-1,8-octanediamine, 4-methyl-1,8-octanediamine, 5-methyl-1,9-nonanediamine, 2,2,4-/2,4,4-trimethylhexanediamine, 2-methyl-1,5-pentanediamine, 2-methyl-1,6-hexanediamine, and 2-methyl-1,7-heptanediamine.

Examples of the alicyclic diamines other than the bis(aminomethyl)cyclohexane include isophorone diamine, 4,4'-thiobis(cyclohexan-1-amine), and 4,4'-thiobis(cyclohexan-1-amine).

Examples of the aromatic diamines include xylylenediamine.

A proportion of the structural unit derived from an α,ω-linear aliphatic dicarboxylic acid having from 4 to 20 carbons in the structural unit derived from a dicarboxylic acid in the polyamide resin of the present embodiment is 60 mol% or more, preferably 65 mol% or more, more preferably 68 mol% or more, even more preferably 72 mol% or more, yet even more preferably 77 mol% or more, and yet even more preferably 82 mol% or more. By setting the proportion to not lower than the aforementioned lower limit value, thermal stability during production of the resin composition tends to be further improved. Furthermore, the proportion of the structural unit derived from the α,ω-linear aliphatic dicarboxylic acid having from 4 to 20 carbons in the structural unit derived from the dicarboxylic acid in the polyamide resin of the present embodiment is 99 mol% or less, preferably 96 mol% or less, more preferably 94 mol% or less, and even more preferably 88 mol% or less. By setting the proportion to not higher than the aforementioned upper limit value, the crystallization rate tends to be further improved.

The α,ω-linear aliphatic dicarboxylic acid having from 4 to 20 carbons is preferably an α,ω-linear aliphatic dicarboxylic acid having from 4 to 15 carbons, and more preferably an α,ω-linear aliphatic dicarboxylic acid having from 4 to 8 carbons.

Specific examples of the α,ω-linear aliphatic dicarboxylic acid having from 4 to 20 carbons include succinic acid, glutaric acid, adipic acid, pimelic acid, suberic acid, azelaic acid, sebacic acid, dodecanedioic acid, and tetradecanedioic acid. At least one type selected from adipic acid, sebacic acid, or dodecanedioic acid is preferred, adipic acid and/or sebacic acid is more preferred, and adipic acid is even more preferred.

A proportion of the structural unit derived from a cyclohexanedicarboxylic acid in the structural unit derived from a dicarboxylic acid in the polyamide resin of the present embodiment is 1 mol% or more, preferably 4 mol% or more, more preferably 6 mol% or more, and even more preferably 12 mol% or more. The proportion of the structural unit derived from the cyclohexanedicarboxylic acid in the structural unit derived from the dicarboxylic acid in the polyamide resin of the present embodiment is 40 mol% or less, preferably 35 mol% or less, more preferably 32 mol% or less, even more preferably 28 mol% or less, yet even more preferably 23 mol% or less, and yet even more preferably 18 mol% or less.

The cyclohexanedicarboxylic acid is preferably 1,3-cyclohexanedicarboxylic acid and/or 1,4-cyclohexanedicarboxylic acid, and more preferably 1,4-cyclohexanedicarboxylic acid.

Examples of the α,ω-linear aliphatic dicarboxylic acid having from 4 to 20 carbons and cyclohexanedicarboxylic acid described above include alicyclic dicarboxylic acids other than the cyclohexanedicarboxylic acid; phthalic acid compounds such as isophthalic acid, terephthalic acid, and orthophthalic acid; and naphthalenedicarboxylic acid isomers such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One type of these can be used, or two or more types thereof can be used in combination.

A total amount of the structural unit derived from an α,ω-linear aliphatic dicarboxylic acid having from 4 to 20 carbons and the structural unit derived from a cyclohexanedicarboxylic acid in the polyamide resin of the present embodiment is preferably 90 mol% or more, more preferably 95 mol% or more, and even more preferably 99 mol% or more, with respect to 100 mol% total of the structural unit derived from the dicarboxylic acid. Furthermore, the total amount of the structural unit derived from the α,ω-linear aliphatic dicarboxylic acid having from 4 to 20 carbons and the structural unit derived from the cyclohexanedicarboxylic acid does not exceed 100 mol%.

The polyamide resin in the present embodiment contains a diamine unit and a dicarboxylic acid unit as main components, but a case where a monomer unit other than these is contained is not to be excluded, and needless to say, the polyamide resin may contain a lactam such as ε-caprolactam or laurolactam, or an aliphatic aminocarboxylic acid unit such as aminocaproic acid or aminoundecanoic acid. Here, the term "main component" indicates that, of the monomer units constituting the polyamide resin, a total amount of the diamine unit and the dicarboxylic acid unit is the largest among all the monomer units. In the present embodiment, the total of the diamine unit and the dicarboxylic acid unit in the polyamide resin preferably accounts for 90.0 mass% or more, more preferably 95.0 mass% or more, and even more preferably 98.0 mass% or more, of the total monomer units.

The lower limit of the number average molecular weight (Mn) of the polyamide resin of the present embodiment is preferably 5000 or more, and more preferably 10000 or more. The upper limit of the Mn described above is preferably 100000 or less, more preferably 50000 or less, and even more preferably 30000 or less.

The polyamide resin of the present embodiment preferably has a melting point (Tm) of 150°C or higher. The upper limit value of the melting point is not particularly specified but is practically 300°C or lower.

The polyamide resin of the present embodiment preferably has a glass transition temperature (Tg) of 113°C or higher. The upper limit value of the glass transition temperature is not particularly specified but is practically 200°C or lower.

The polyamide resin of the present embodiment has a crystallization temperature at temperature drop (Tcc) according to differential scanning calorimetry (DSC) of preferably 180°C or higher and preferably 260°C or lower.

For the polyamide resin of the present embodiment, the difference (Tm - Tcc) between the melting point (Tm) and the crystallization temperature at temperature drop (Tcc) according to differential scanning calorimetry (DSC) is preferably 58°C or less. When the difference between the melting point (Tm) and the crystallization temperature at temperature drop (Tcc) is small, the crystallization rate becomes faster. Furthermore, the lower limit of the difference (Tm - Tcc) of the melting point (Tm) and the crystallization temperature at temperature drop (Tcc) is not particularly specified and examples thereof include 5°C or more, or may be 10°C or more, 15°C or more, or 18°C or more.

The melting point (Tm), the glass transition temperature (Tg), and the crystallization temperature at temperature drop (Tcc) described above are measured in accordance with description in Examples below (hereinafter, the same applies to a melting point, a glass transition temperature, and a crystallization temperature at temperature drop).

In a first embodiment of the polyamide resin of the present embodiment, the bis(aminomethyl)cyclohexane is 1,4-bis(aminomethyl)cyclohexane. In the first embodiment, preferably 70 mol% or more, more preferably 80 mol% or more, even more preferably 90 mol% or more, yet even more preferably 95 mol% or more, and yet even more preferably 99 mol% or more, of the bis(aminomethyl)cyclohexane is 1,4-bis(aminomethyl)cyclohexane.

In the first embodiment, the proportion of the trans isomer of the 1,4-bis(aminomethyl)cyclohexane (a proportion where a total amount of the trans isomer and the cis isomer is assumed to be 100 mol%) is preferably 35 mol% or more, more preferably 38 mol% or more, even more preferably 42 mol% or more, and yet even more preferably 46 mol% or more, and preferably 55 mol% or less, and more preferably 53 mol% or less. By setting the proportion to not lower than the lower limit value, an even faster crystallization rate can be achieved. By setting the proportion to not higher than the upper limit value, thermal deterioration of the resin composition tends to be effectively suppressed.

In a polyamide resin of the first embodiment, a proportion of the structural unit derived from a cyclohexanedicarboxylic acid in the structural unit derived from a dicarboxylic acid is 1 mol% or more, preferably 4 mol% or more, more preferably 6 mol% or more, and even more preferably 12 mol% or more. A proportion of the structural unit derived from the cyclohexanedicarboxylic acid in the structural unit derived from the dicarboxylic acid in the polyamide resin of the first embodiment is preferably 20 mol% or less, and more preferably 18 mol% or less.

The polyamide resin of the first embodiment has a melting point of preferably 250°C or higher, and more preferably 255°C or higher. The upper limit value of the melting point is not particularly specified but is practically 350°C or lower.

The polyamide resin of the first embodiment has a glass transition temperature of preferably 111°C or higher, more preferably 113°C or higher, even more preferably 118°C or higher, and yet even more preferably 120°C or higher. The upper limit value of the glass transition temperature is not particularly specified but is practically 140°C or lower.

The polyamide resin of the first embodiment has a crystallization temperature at temperature drop (Tcc) according to differential scanning calorimetry (DSC) of preferably 200°C or higher, and more preferably 210°C or higher. Furthermore, the upper limit of the crystallization temperature at temperature drop (Tcc) of the polyamide resin of the first embodiment is preferably 260°C or lower, more preferably 255°C or lower, even more preferably 251°C or lower, and yet even more preferably 248°C or lower.

For the polyamide resin of the first embodiment, the difference (Tm - Tcc) between the melting point (Tm) and the crystallization temperature at temperature drop (Tcc) according to differential scanning calorimetry (DSC) is preferably 44°C or lower, more preferably 40°C or lower, even more preferably 38°C or lower, and yet even more preferably 35°C or lower. Furthermore, the lower limit of the difference (Tm - Tcc) between the melting point (Tm) and the crystallization temperature at temperature drop (Tcc) is preferably 5°C or higher, more preferably 10°C or higher, even more preferably 15°C or higher, and yet even more preferably 20°C or higher.

In a second embodiment of the polyamide resin of the present embodiment, the bis(aminomethyl)cyclohexane is 1,3-bis(aminomethyl)cyclohexane. In the second embodiment, preferably 70 mol% or more, more preferably 80 mol% or more, even more preferably 90 mol% or more, yet even more preferably 95 mol% or more, and yet even more preferably 99 mol% or more, of the bis(aminomethyl)cyclohexane is 1,3-bis(aminomethyl)cyclohexane.

In the second embodiment, a proportion of the trans isomer of the 1,3-bis(aminomethyl)cyclohexane (a proportion where a total amount of the trans isomer and the cis isomer is assumed to be 100 mol%) is 0 mol% or more, preferably 5 mol% or more, more preferably 8 mol% or more, even more preferably 12 mol% or more, yet even more preferably 15 mol% or more, yet even more preferably 20 mol% or more, and yet even more preferably 25 mol% or more, and preferably 40 mol% or less, more preferably 35 mol% or less, and even more preferably 30 mol% or less. By setting the proportion to not lower than the lower limit value, thermal deterioration of the resin composition tends to be effectively suppressed. By setting the proportion to not higher than the upper limit value, an even faster crystallization rate can be achieved.

In the polyamide resin of the second embodiment, a proportion of the structural unit derived from the cyclohexanedicarboxylic acid in the structural unit derived from the dicarboxylic acid is 1 mol% or more, preferably 4 mol% or more, more preferably 6 mol% or more, even more preferably 12 mol% or more, yet even more preferably 16 mol% or more, yet even more preferably 21 mol% or more, and yet even more preferably 26 mol% or more. The proportion of the structural unit derived from the cyclohexanedicarboxylic acid in the structural unit derived from the dicarboxylic acid in the polyamide resin of the second embodiment is 40 mol% or less, preferably 35 mol% or less, and more preferably 32 mol% or less.

The polyamide resin of the second embodiment has a melting point of preferably 240°C or higher, more preferably 250°C or higher, even more preferably 255°C or higher, and yet even more preferably 260°C or higher. The upper limit value of the melting point is not particularly specified but is practically 300°C or lower.

The polyamide resin of the second embodiment has a glass transition temperature of preferably 110°C or higher, more preferably 115°C or higher, even more preferably 121°C or higher, and yet even more preferably 125°C or higher. The upper limit value of the glass transition temperature is not particularly specified but is practically 150°C or lower.

The polyamide resin of the second embodiment has a crystallization temperature at temperature drop (Tcc) according to differential scanning calorimetry (DSC) of preferably 183°C or higher, more preferably 190°C or higher, even more preferably 200°C or higher, and yet even more preferably 220°C or higher. Furthermore, the upper limit of the crystallization temperature at temperature drop (Tcc) of the polyamide resin of the second embodiment is preferably 255°C or lower, more preferably 250°C or lower, even more preferably 245°C or lower, and yet even more preferably 240°C or lower.

For the polyamide resin of the second embodiment, the difference (Tm - Tcc) between the melting point (Tm) and the crystallization temperature at temperature drop (Tcc) according to differential scanning calorimetry (DSC) is preferably 64°C or lower, more preferably 60°C or lower, even more preferably 56°C or lower, and yet even more preferably 52°C or lower. Furthermore, the lower limit of the difference (Tm - Tcc) between the melting point (Tm) and the crystallization temperature at temperature drop (Tcc) is preferably 5°C or higher, more preferably 10°C or higher, even more preferably 15°C or higher, and yet even more preferably 20°C or higher.

The polyamide resin of the present embodiment is more preferably the polyamide resin of the first embodiment described above. The polyamide resin of the first embodiment more effectively exhibits acceleration of crystallization rate when a resin composition containing a nucleator is formed.

The polyamide resin of the present embodiment can be synthesized according to a known method. For example, the synthesis can be performed according to the description in paragraphs 0016 to 0018 of WO 2018/074234, the contents of which are incorporated herein by reference.

### Resin Composition

A resin composition of the present embodiment contains a polyamide resin of the present embodiment. The resin composition of the present embodiment may contain one type of the polyamide resin of the present embodiment, or two or more types of the polyamide resins of the present embodiment, or may contain an additional component. In the resin composition of the present embodiment, a total amount of the polyamide resin of the present embodiment and a reinforcing filler to be blended, as necessary, is preferably 90 mass% or more.

Examples of such an additional component include polyamide resins other than the polyamide resins of the present embodiment, thermoplastic resins other than polyamide resins, reinforcing fillers, and resin additives.

Examples of the thermoplastic resins other than polyamide resins include polyphenylene ether resins and polyester resins.

Examples of the resin additives include nucleators, flame retardants, stabilizers, mold release agents, alkalis, elastomers, titanium oxide, hydrolysis resistance improvers, matting agents, plasticizers, dispersants, antistatic agents, anticolorants, antigelling agents, and colorants. For details thereof, reference can be made to the descriptions in paragraphs 0045 to 0092 and paragraphs 0100 to 0105 of WO 2021/241471, the contents of which are incorporated herein by reference. An example of the resin composition of the present embodiment contains a nucleator as a resin additive.

The total amount of such additional components described above is preferably 20.0 mass% or less, more preferably 15.0 mass% or less, even more preferably 10.0 mass% or less, and yet even more preferably 5.0 mass% or less, of the resin composition. The lower limit value of the content of such additional components described above is preferably 0.1 mass% or more. Only one type of such additional components may be used alone, or two or more types of such additional components may be used in combination.

### Additional Polyamide Resin

An additional polyamide resin may be an aliphatic polyamide resin or a semi-aromatic polyamide resin.

Examples of the aliphatic polyamide resin include polyamide 6, polyamide 66, polyamide 46, polyamide 6/66 (copolymer of a polyamide 6 component and a polyamide 66 component), polyamide 610, polyamide 612, polyamide 410, polyamide 1010, polyamide 11, polyamide 12, and polyamide 9C (a polyamide formed from a mixed diamine of 1,9-nonanediamine and 2-methyl-1,8-octanediamine and 1,4-cyclohexanedicarboxylic acid).

Examples of the semi-aromatic polyamide resin include polyamide 6I, polyamide 6T/6I, polyamide 9N (polyamide made of a mixed diamine containing 1,9-nonanediamine and 2-methyl-1,8-octanediamine and 2,6-naphthalenedicarboxylic acid), MXD6, which is a polycondensate of meta-xylylenediamine and adipic acid, MXD6I, which is a polycondensate of meta-xylylenediamine, adipic acid, and isophthalic acid, MP6, which is a polycondensate of meta-xylylenediamine, para-xylylenediamine, and adipic acid, MXD10, which is a polycondensate of meta-xylylenediamine and sebacic acid, MP10, which is a polycondensate of meta-xylylenediamine, para-xylylenediamine, and sebacic acid, and PXD10, which is a polycondensate of para-xylylenediamine and sebacic acid.

When the resin composition of the present embodiment contains an additional polyamide resin, the content thereof is preferably 1 part by mass or more, and more preferably 5 parts by mass or more, and preferably 30 parts by mass or less, more preferably 20 parts by mass or less, and even more preferably 10 parts by mass or less, with respect to 100 parts by mass of the polyamide resin of the present embodiment.

The resin composition of the present embodiment may contain one type or two or more types of additional polyamide resins. When two or more types are contained, the total amount thereof is preferably within the aforementioned ranges.

### Thermoplastic Resin Other Than Polyamide Resin

Examples of the thermoplastic resin other than the polyamide resin include polyester resins, such as polyethylene terephthalate, polybutylene terephthalate, polyethylene naphthalate, and polybutylene naphthalate. One type or two or more types of these thermoplastic resins other than the polyamide resin may be used.

### Reinforcing Filler

The resin composition of the present embodiment may contain a reinforcing filler. By allowing the reinforcing filler to be contained, mechanical strength of the resulting molded article can be improved.

The type and the like of the reinforcing filler that can be used in the present embodiment is not particularly specified, and the reinforcing filler may be any type, such as fibers, fillers, flakes, or beads, but fibers are preferable.

When the reinforcing filler is fibers, the fibers may be short fibers or long fibers.

When the reinforcing filler is short fibers, a filler, beads, or the like, examples of the form of the resin composition of the present embodiment include pellets, powdered material of the pellets, and a film formed from the pellets.

When the reinforcing filler is long fibers, examples of the reinforcing filler include long fibers for a so-called, uni-directional (UD) material, and sheet-like long fibers such as a woven or knitted fabric. When these long fibers are used, a sheet-shaped resin composition (for example, a prepreg) can be formed by impregnating the components other than the reinforcing filler of the resin composition of the present embodiment into the reinforcing filler, which is long fibers formed into a sheet shape.

Examples of the raw material of the reinforcing filler include inorganic materials such as glass, carbon (e.g., carbon fibers), alumina, boron, ceramic, metal (e.g., steel), asbestos, clay, zeolite, potassium titanate, barium sulfate, titanium oxide, silicon oxide, aluminum oxide, and magnesium hydroxide, and organic materials such as plants (including, for example, kenaf and bamboo), aramid, polyoxymethylene, aromatic polyamides, polyparaphenylene benzobisoxazole, and ultra-high molecular weight polyethylene, and of these, glass is preferable.

The resin composition of the present embodiment preferably contains glass fibers as a reinforcing filler.

The glass fibers are selected from glass compositions such as A glass, C glass, E glass, R glass, D glass, M glass, and S glass, and E glass (alkali-free glass) is particularly preferable.

The term glass fiber refers to a fibrous material having a perfect circular or polygonal cross-sectional shape when the glass fiber is cut at an angle perpendicular to the length direction. The number average fiber size of a single glass fiber is usually from 1 to 25 µm, and preferably from 5 to 17 µm. Moldability of the resin composition tends to further improve when the number average fiber size is set to 1 µm or more. The appearance of the obtained molded article improves, and the reinforcing effect also tends to improve by setting the number average fiber size to 25 µm or less. The glass fiber may be a single fiber, or a fiber obtained by intertwining a plurality of single fibers.

The form of the glass fiber may be any of a glass roving in which a single fiber or a plurality of intertwined single fibers are continuously wound, chopped strands cut to uniform lengths of 1 to 10 mm (namely, glass fibers having a number average fiber length of 1 to 10 mm), or milled fibers crushed to an approximate length of 10 to 500 µm (namely, glass fibers having a number average fiber length of 10 to 500 µm), and chopped strands cut to uniform lengths of 1 to 10 mm are preferable. Glass fibers of different forms may be used in combination.

Also, the glass fiber preferably has an irregular cross-sectional shape. In this irregular cross-sectional shape, the flatness represented by the major axis/minor axis ratio of a crosssection perpendicular to the length direction of the fiber is, for example, from 1.5 to 10, preferably from 2.5 to 10, more preferably from 2.5 to 8, and particularly preferably from 2.5 to 5.

As long as the characteristics of the resin composition of the present embodiment are not significantly impaired, the glass fiber may be, for example, a glass fiber that has been oxidized or a glass fiber that has been surface treated with a silane-based compound, an epoxy-based compound, or a urethane-based compound, to improve affinity with the resin component.

When the resin composition of the present embodiment contains a reinforcing filler (preferably glass fibers), a content thereof is preferably 10 mass% or more, more preferably 20 mass% or more, and even more preferably 25 mass% or more, of the resin composition. By setting the content to not lower than the lower limit value, the mechanical strength of the resulting molded article tends to further improve. Furthermore, the content of the reinforcing filler (preferably glass fibers) is preferably 60 mass% or less, more preferably 50 mass% or less, and even more preferably 45 mass% or less, and depending on the use or the like, may be 40 mass% or less, or 35 mass% or less, of the resin composition. By setting the content to not higher than the upper limit value, the appearance of the molded article is improved, and fluidity of the resin composition tends to be further improved.

The resin composition of the present embodiment may contain only one type of the reinforcing fillers (preferably glass fibers), or may contain two or more types of the reinforcing fillers. When two or more types thereof are contained, the total amount thereof is preferably within the aforementioned ranges.

### Nucleator

The resin composition of the present embodiment may contain a nucleator. By allowing the nucleating agent to be contained, a faster crystallization rate of the resin composition can be achieved.

The nucleator is not particularly limited as long as it remains unmelted during melt processing and can become a nucleus of a crystal in a cooling process, and may be an organic nucleator or an inorganic nucleator, but is preferably an inorganic nucleator.

Examples of the inorganic nucleator include graphite, molybdenum disulfide, barium sulfate, talc, calcium carbonate, sodium phosphate, mica, and kaolin. The inorganic nucleator is more preferably at least one type selected from talc and calcium carbonate, and talc is even more preferable.

The organic nucleator is not particularly limited, and a known nucleator can be used. For example, the nucleator is preferably at least one type selected from a dibenzylidene sorbitolbased nucleator, a nonitol-based nucleator, a phosphate-based nucleator, a rosin-based nucleator, or a metal benzoate-based nucleator.

The lower limit value of the number average particle size of the nucleator is preferably 0.1 µm or more. The upper limit value of the number average particle size of the nucleator is preferably 40 µm or less, more preferably 30 µm or less, even more preferably 28 µm or less, yet even more preferably 15 µm or less, and yet even more preferably 10 µm or less. When the number average particle size is set to 40 µm or less, the number of nucleators that become nuclei increases in proportion to the blended amount of the nucleator, and thus the crystal structure tends to be more stable.

A content of the nucleator in the resin composition of the present embodiment is 0.1 parts by mass or more, preferably 0.5 parts by mass or more, and more preferably 1 part by mass or more, with respect to 100 parts by mass of the polyamide resin of the present embodiment. By setting the content to not lower than the lower limit value, the crystal state of the resin composition can be more sufficiently stabilized. Furthermore, the content of the nucleator in the resin composition of the present embodiment is 10 parts by mass or less, preferably 5 parts by mass or less, and more preferably 4 parts by mass or less, with respect to 100 parts by mass total of the polyamide resin of the present embodiment.

When the resin composition of the present embodiment contains a nucleator, the resin composition may contain only one type of the nucleator, or may contain two or more types of the nucleators. When two or more types thereof are contained, the total amount thereof is preferably within the aforementioned ranges.

### Physical Properties of Resin Composition

The resin composition of the present embodiment has a glass transition temperature (Tg) according to differential scanning calorimetry (DSC) of preferably 111 °C or higher, more preferably 115°C or higher, and even more preferably 118°C or higher. The upper limit of the glass transition temperature (Tg) is, for example, 200°C or lower. Required performances can be satisfactorily achieved even when the upper limit is 150°C or lower or 140°C or lower.

The resin composition of the present embodiment has a melting point (Tm) according to differential scanning calorimetry (DSC) of preferably 264°C or higher, and more preferably 265°C or higher, and preferably 350°C or lower, and more preferably 330°C or lower, and may be 300°C or lower.

The resin composition of the present embodiment has a crystallization temperature at temperature drop (Tcc) according to differential scanning calorimetry (DSC) of preferably 230°C or higher, more preferably 235°C or higher, and even more preferably 238°C or higher, and preferably 250°C or lower, and more preferably 245°C or lower.

For the resin composition of the present embodiment, the difference (Tm - Tcc) between the melting point (Tm) and the crystallization temperature at temperature drop (Tcc) according to differential scanning calorimetry (DSC) is preferably 33°C or lower, more preferably 32°C or lower, even more preferably 30°C or lower, yet even more preferably 28°C or lower, and yet even more preferably 27°C or lower. When the difference between the melting point (Tm) and the crystallization temperature at temperature drop (Tcc) is small, the crystallization rate becomes faster. Furthermore, the lower limit of the difference (Tm - Tcc) of the melting point (Tm) and the crystallization temperature at temperature drop (Tcc) is not particularly specified and examples thereof include 5°C or more, or may be 10°C or more, 15°C or more, or 18°C or more.

### Method for Producing Resin Composition

A method for producing the resin composition of the present embodiment is not particularly specified, and a known method for producing a thermoplastic resin composition can be widely adopted. Specifically, the resin composition can be produced by premixing each component using various mixing machines, such as a tumbler and a Henschel mixer, and then melt-kneading the components using, for example, a Banbury mixer, a roll, a Brabender, a single-screw extruder, a twin-screw extruder, or a kneader.

In addition, the resin composition can also be produced by, for example, not mixing the components in advance or mixing only some of the components in advance, feeding the components into an extruder using a feeder, and then melt-kneading the components.

The reinforcing filler (especially, glass fibers) is preferably side-fed.

Furthermore, the pellets can also be manufactured by, for example, mixing some of the components in advance and feeding the mixture into an extruder to melt-knead the mixture to obtain a composition as a master batch, and mixing the master batch with the remaining components again and then melt-kneading the mixture.

### Molded Article

A molded article of the present embodiment is made of the resin of the present embodiment or the resin composition of the present embodiment.

A method for producing the molded article of the present embodiment is not particularly specified. An example is an injection-molded article formed by injection molding.

For example, the molded article of the present embodiment may be directly molded by various molding methods after the components are melt-kneaded, or may be molded by various molding methods after the components are melt-kneaded and pelletized and then molten again.

A method for molding the molded article is not particularly limited, and known molding methods can be adopted. Examples thereof include an injection molding method, an injectioncompression molding method, an extrusion molding method, a profile extrusion method, a transfer molding method, a hollow molding method, a gas-assisted hollow molding method, a blow molding method, extrusion blow molding, an in-mold coating (IMC) molding method, a rotary molding method, a multi-layer molding method, a two-color molding method, an insert molding method, a sandwich molding method, a foaming molding method, and a pressure molding method.

The shape of the molded article of the present embodiment is not particularly limited, and can be selected as appropriate depending on the application and purpose of the molded article. Examples thereof include plate-like, plate-shaped, rod-shaped, sheet-like, film-like, cylindrical, annular-shaped, circular-shaped, oval-shaped, gear-shaped, polygon-shaped, odd-shaped, hollow, frame-shaped, box-shaped, and panel-shaped molded articles.

The fields of application of the molded articles of the present embodiment are not particularly specified, and the molded articles can be widely used in applications such as transport machine components such as automobile components, general machine components, precision machine components, electronic and electrical equipment components, OA equipment components, building materials and building-related components, medical devices, leisure sports goods, playground equipment, medical products, household goods such as food packaging films, and defense and aerospace products.

### Examples

Hereinafter, the present invention will be described more specifically with reference to Examples. Materials, usage amounts, proportions, processing details, and processing procedures described in the following Examples can be changed as appropriate without departing from the spirit of the invention. Thus, the scope of the present invention is not limited to the following specific examples.

If it is difficult to obtain the measuring instrument or the like used in Examples due to discontinuation or the like, another instrument with equivalent performance can be used for the measurement.

In the present Examples, a bis(aminomethyl)cyclohexane may be referred to as BAC, a cyclohexanedicarboxylic acid may be referred to as CHDA, and adipic acid may be referred to as AdA.

### Measurement of Thermophysical Properties of Resin and Resin Composition

The glass transition temperature (Tg; unit: °C), crystallization temperature at temperature rise (Tch; unit: °C), crystallization enthalpy at temperature rise (Hch; unit: J/g), melting point (Tm; unit: °C), fusion enthalpy (Hm; unit: J/g), crystallization temperature at temperature drop (Tcc; unit: °C), and crystallization enthalpy at temperature drop (Hcc; unit: J/g) of each of the resin and the resin composition (pellet) were measured by differential scanning calorimetry (DSC). The differential scanning calorimetry (DSC) measurements were carried out in accordance with JIS K 7121 and K 7122. A differential scanning calorimeter was used, and the obtained pellet of resin or pellet of resin composition was crushed and placed into a measuring pan of the differential scanning calorimeter, and then heated under a nitrogen atmosphere to a temperature of 20°C higher than the melting point of each of the resins at a temperature increase rate of 10°C/min. Immediately after the temperature increase was completed, the measurement pan was removed and rapidly cooled by being pressed against dry ice. Measurements were then performed. As the measurement conditions, the temperature was increased to a temperature higher than the melting point at a temperature increase rate of 10°C/min, and then maintained at that temperature for 5 minutes, after which the temperature was reduced to 100°C at a temperature decrease rate of -5°C/min, and measurements were then carried out to determine thermophysical property values.

Based on the measured values described above, Tm - Tcc (unit: °C) was calculated.

The "DSC-60" available from Shimadzu Corporation was used as the differential scanning calorimeter.

### Example 1

In a reaction vessel having an internal capacity of 3 L and equipped with an agitator, a condenser, a thermometer, a dropping funnel, a pump, and a nitrogen introduction tube, 585.0 g (4.003 mol) of adipic acid, 36.3 g (0.211 mol) of 1,4-cyclohexanedicarboxylic acid (product name: 1,4-CHDA, produced by Nikko Rica Corporation; proportion of trans isomer: 36 mol%), 0.876 g (0.00051 mol) of calcium hypophosphite, and 0.056 g (0.00069 mol) of sodium acetate, which had been precisely weighed, were placed. While nitrogen was streamed in the reaction vessel and while the mixture was agitated, the temperature was increased to 200°C. After the temperature reached 200°C, drop-wise addition of 592.8 g (4.167 mol) of 1,4-bis(aminomethyl)cyclohexane stored in the dropping funnel to the melted raw materials in the reaction vessel was started, and the temperature in the reaction vessel was continuously raised to 290°C while the generated condensed water was removed from the system. After completion of the drop-wise addition of the 1,4-bis(aminomethyl)cyclohexane, the temperature was continuously raised to 295°C. The agitation was stopped at the time when a predetermined time period had passed, and thus a polyamide resin of Example 1 was obtained.

For the obtained polyamide resin, thermophysical properties were measured by the method described above.

### Examples 2 to 15 and Comparative Examples 1 to 7

Polyamide resins were obtained similarly to Example 1 except for changing the raw material monomers to those listed in Tables 1 to 3.

For Comparative Example 5 and Comparative Example 7, decomposition occurred in the middle of synthesis, and thus no polyamide resins were obtained.

**[Table 1]**

| | | | Example 1 | Example 2 | Example 3 | Comparative Example 1 | Example 4 | Comparative Example 2 | Example 5 | Comparative Example 3 |
|---|---|---|---|---|---|---|---|---|---|---|
| Diamine | Amine type | | 1,4-BAC | 1,4-BAC | 1,4-BAC | 1,4-BAC | 1,4-BAC | 1,4-BAC | 1,4-BAC | 1,4-BAC |
| | Trans proportion | mol% | 50 | 50 | 50 | 50 | 45 | 45 | 40 | 40 |
| Dicarboxylic acid | AdA | mol% | 95 | 90 | 85 | 100 | 90 | 100 | 90 | 100 |
| | CHDA | mol% | 5 | 10 | 15 | 0 | 10 | 0 | 10 | 0 |
| Thermophysical properties | Tg | °C | 116 | 121 | 122 | 110 | 120 | 110 | 120 | 110 |
| | Tch | °C | 167 | 163 | 162 | 167 | 164 | 167 | 176 | 171 |
| | Hch | J/g | 28.7 | 24.3 | 21.8 | 31.6 | 31 | 29.7 | 26.3 | 28.4 |
| | Tm | °C | 277 | 280 | 282 | 276 | 272 | 270 | 266 | 263 |
| | Hm | J/g | 35.5 | 34.2 | 28.9 | 38.9 | 36.0 | 35.5 | 29.0 | 32.3 |
| | Tcc | °C | 236 | 247 | 250 | 231 | 230 | 219 | 222 | 204 |
| | Hcc | J/g | 30.2 | 21.8 | 14.3 | 35.4 | 25.3 | 35.2 | 20.5 | 30.8 |
| | Tm - Tcc | °C | 41 | 33 | 32 | 45 | 42 | 51 | 44 | 59 |

**[Table 2]**

| | | | Example 6 | Example 7 | Example 8 | Example 9 | Example 10 | Comparative Example 4 | Comparative Example 5 |
|---|---|---|---|---|---|---|---|---|---|
| Diamine | Amine type | | 1,3-BAC | 1,3-BAC | 1,3-BAC | 1,3-BAC | 1,3-BAC | 1,3-BAC | 1,3-BAC |
| | Trans proportion | mol% | 26 | 26 | 26 | 26 | 26 | 26 | 26 |
| Dicarboxylic acid | AdA | mol% | 90 | 85 | 80 | 75 | 70 | 100 | 50 |
| | CHDA | mol% | 10 | 15 | 20 | 25 | 30 | 0 | 50 |
| Thermophysical properties | Tg | °C | 117 | 120 | 126 | 129 | 134 | 109 | Decomposed |
| | Tch | °C | 195 | 194 | 201 | 192 | 191 | 191 | |
| | Hch | J/g | 31.5 | 31.4 | 27.1 | 29.1 | 28.1 | 17.8 | |
| | Tm | °C | 246 | 256 | 257 | 268 | 274 | 234 | |
| | Hm | J/g | 30.0 | 28.1 | 24.5 | 29.0 | 28.5 | 19.3 | |
| | Tcc | °C | 195 | 207 | 210 | 222 | 235 | 169 | |
| | Hcc | J/g | 35.2 | 29.3 | 26.3 | 27.2 | 26.6 | 17.9 | |
| | Tm - Tcc | °C | 51 | 49 | 47 | 46 | 39 | 65 | 0 |

**[Table 3]**

| | | | Example 11 | Example 12 | Example 13 | Example 14 | Example 15 | Comparative Example 6 | Comparative Example 7 |
|---|---|---|---|---|---|---|---|---|---|
| Diamine | Amine type | | 1,3-BAC | 1,3-BAC | 1,3-BAC | 1,3-BAC | 1,3-BAC | 1,3-BAC | 1,3-BAC |
| | Trans proportion | mol% | 10 | 10 | 10 | 10 | 10 | 10 | 10 |
| Dicarboxylic acid | AdA | mol% | 90 | 85 | 80 | 75 | 70 | 100 | 50 |
| | CHDA | mol% | 10 | 15 | 20 | 25 | 30 | 0 | 50 |
| Thermophysical properties | Tg | °C | 117 | 120 | 126 | 131 | 134 | 109 | Decomposed |
| | Tch | °C | 179 | 177 | 183 | 179 | 176 | 176 | |
| | Hch | J/g | 36.2 | 37.5 | 33.2 | 31.7 | 29.5 | 43.0 | |
| | Tm | °C | 254 | 269 | 274 | 277 | 284 | 247 | |
| | Hm | J/g | 39.4 | 35.8 | 32.1 | 30.5 | 30.2 | 42.6 | |
| | Tcc | °C | 199 | 217 | 228 | 232 | 244 | 182 | |
| | Hcc | J/g | 28.7 | 26.1 | 27.9 | 25.8 | 23.4 | 31.1 | |
| | Tm - Tcc | °C | 55 | 52 | 46 | 45 | 40 | 65 | 0 |

### Examples 16 to 18 and Comparative Examples 8 to 10

### Compound

Each type of the polyamide resin listed in Table 4, the glass fibers, and/or the nucleator were weighed. The blended amount of the polyamide resin is an amount that all components other than the glass fibers and the nucleator were the polyamide resin. Note that the 1,4-BAC6C (CHDA: 10 mol%) was the polyamide resin obtained in Example 5, and the 1,4-BAC6 was the polyamide resin obtained in Comparative Example 3.

The polyamide resin and the optionally blended nucleator were blended in a tumbler and fed from the screw root of a twin-screw extruder (TEM26SS, available from Shibaura Machine Co., Ltd.) to be melted. Thereafter, in a case where the glass fibers were blended, the glass fibers were side-fed, and thus a pellet of the resin composition was prepared. The temperature of the twin-screw extruder was set to 290°C.

As the glass fibers, E glass fibers (T-296GH, available from Nippon Electric Glass Co., Ltd.) were used. As the nucleator, talc (Micron White #5000A, available from Hayashi Kasei Co., Ltd.) was used.

As described above, the thermophysical properties of the obtained resin composition (pellet) were measured.

**[Table 4]**

| | | | Example 16 | Example 17 | Example 18 | Comparative Example 8 | Comparative Example 9 | Comparative Example 10 |
|---|---|---|---|---|---|---|---|---|
| Polyamide resin | Resin type | | 1,4-BAC6C (CHDA: 10 mol%) | | | 1,4-BAC6 | | |
| | Trans proportion | mol% | 40 | | | 40 | | |
| Glass fibers | Content | mass% | 30 | 30 | - | 30 | 30 | - |
| Nucleator | Content | mass% | - | 2 | 3.8 | | 2 | 3.8 |
| Thermophysical properties | Tg | °C | 120 | 120 | 120 | 110 | 110 | 110 |
| | Tch | °C | 161 | 163 | 172 | 162 | 157 | 166 |
| | Hch | J/g | 18.5 | 19.2 | 25.2 | 20.7 | 20.3 | 26.4 |
| | Tm | °C | 266 | 266 | 266 | 263 | 263 | 263 |
| | Hm | J/g | 26.3 | 23.1 | 31.0 | 26.8 | 34.3 | 30.7 |
| | Tcc | °C | 240 | 240 | 240 | 227 | 229 | 229 |
| | Hcc | J/g | 14.3 | 18.3 | 25.6 | 17.3 | 17.3 | 25.9 |
| | Tm - Tcc | °C | 26 | 26 | 26 | 36 | 34 | 34 |

Note that a smaller Tm - Tcc indicates a faster crystallization rate.

The polyamide resin and the resin composition of the present invention exhibited a fast crystallization rate. In particular, the polyamide resin and the resin composition were valuable from the viewpoint of capability of increasing the crystallization rates without lowering the glass transition temperatures of the polyamide resin and the resin composition.

When the resin compositions of Examples 16 to 18 and Comparative Examples 8 to 10 were injection-molded, good injection-molded articles were obtained.

## Claims

1. A polyamide resin, comprising a structural unit derived from a diamine and a structural unit derived from a dicarboxylic acid,
70 mol% or more of the structural unit derived from a diamine being derived from a bis(aminomethyl)cyclohexane, and
of the structural unit derived from a dicarboxylic acid, from 99 to 60 mol% being derived from an α,ω-linear aliphatic dicarboxylic acid having from 4 to 20 carbons, and from 1 to 40 mol% being derived from a cyclohexanedicarboxylic acid, with the proviso that a total amount of the structural unit derived from an α,ω-linear aliphatic dicarboxylic acid having from 4 to 20 carbons and the structural unit derived from a cyclohexanedicarboxylic acid does not exceed 100 mol%.

2. The polyamide resin according to claim 1, wherein the bis(aminomethyl)cyclohexane comprises 1,4-bis(aminomethyl)cyclohexane.

3. The polyamide resin according to claim 2, wherein a proportion of a trans isomer of the 1,4-bis(aminomethyl)cyclohexane is from 35 to 55 mol%.

4. The polyamide resin according to claim 2 or 3, wherein from 1 to 20 mol% of the structural unit derived from a dicarboxylic acid is derived from a cyclohexanedicarboxylic acid.

5. The polyamide resin according to claim 1, wherein the bis(aminomethyl)cyclohexane comprises 1,3-bis(aminomethyl)cyclohexane.

6. The polyamide resin according to claim 5, wherein a proportion of a trans isomer of the 1,3-bis(aminomethyl)cyclohexane is from 0 to 40 mol%.

7. The polyamide resin according to claim 5 or 6, wherein from 1 to 40 mol% of the structural unit derived from a dicarboxylic acid is derived from a cyclohexanedicarboxylic acid.

8. The polyamide resin according to any one of claims 1 to 7, wherein the α,ω-linear aliphatic dicarboxylic acid having from 4 to 20 carbons comprises adipic acid.

9. The polyamide resin according to any one of claims 1 to 8, wherein a glass transition temperature (Tg) of the polyamide resin according to differential scanning calorimetry (DSC) is from 113 to 200°C.

10. A resin composition, comprising the polyamide resin according to any one of claims 1 to 9 and a reinforcing filler.

11. A molded article comprising the polyamide resin according to any one of claims 1 to 9.

12. A molded article comprising the resin composition according to claim 10.
